# EUROPÄISCHE PATENTSCHRIFT

(11) **EP 0 597 364 B1**
(45) Veröffentlichungstag und Bekanntmachung des Hinweises auf die Patenterteilung: **29.09.1999**
(21) Anmeldenummer: 93117752.1
(22) Anmeldetag: 02.11.1993
(51) Int. Cl.: C08L 1/26, C08L 1/02, C08L 3/00, C08L 5/14

(54) **Reversibel vernetzte Hydrokolloidmischungen mit guter Dispergierbarkeit und Verfahren zu deren Herstellung**
Reversible cross-linked hydrocolloid mixtures with good dispersibility and process for producing the same
Mélanges d'hydrocolloides réticulés de façon réversible et présentant une bonne dispersibilité et procédé pour les obtenir

(30) Priorität: 13.11.1992 DE 4238391
(43) Veröffentlichungstag der Anmeldung: 18.05.1994
(73) Patentinhaber: WOLFF WALSRODE AKTIENGESELLSCHAFT, D-29699 Walsrode (DE)
(72) Erfinder: Reinhardt, Eugen, D-29664 Walsrode (DE); Kniewske, Reinhard, Dr., D-29683 Fallingbostel (DE); Kiesewetter, René, Dr., D-29614 Soltau (DE); Szablikowski, Klaus, Dr., D-29664 Walsrode (DE)
(74) Vertreter: Pettrich, Klaus-Günter, Dr.

(56) Entgegenhaltungen:
- EP-A- 0 407 838
- DE-C- 739 630
- US-A- 4 373 959

## Beschreibung

Die Erfindung betrifft reversibel vernetzte Hydrokolloidmischungen bestehend aus mindestens einem Hydrokolloid, also einem veredelten, d.h. chemisch veränderten Biopolymer und mindestens einem als Polysaccharid bezeichneten unveredelten, d.h. chemisch unveränderten Biopolymer aus der Gruppe der Polysaccharidether, die miteinander vermischt, mit Wasser angedickt und mit Vernetzungsreagenzien hydrophobiert werden und ein Verfahren zu deren Herstellung. Solche Produkte können z.B. als Hilfsstoffe in Bauwerkstoffen, als Klebstoffe, in Dispersionsfarben usw. eingesetzt werden.

Wasserlösliche Hydrokolloide, insbesondere Cellulosederivate, finden aufgrund ihrer guten Verfügbarkeit, ihres Quell-, Gelbildungs- und Löseverhaltens vielfältige Anwendung als Verdickungs- und Dispergiermittel. Sie dienen darüber hinaus als Trägermaterialien bei der Herstellung von Pharmaka, Nahrungsmitteln und Kosmetika und werden bei der Formulierung von Pflanzenschutzmitteln eingesetzt. Das Einbringen des normalerweise in trockener Form als Pulver oder Granulat vorliegenden Hydrokolloids in wäßrige Systeme führt jedoch häufig zu einer verstärkten Staubentwicklung und Klumpenbildung und damit verbunden zu unerwünscht langen Auflösungszeiten. Derartige Nachteile bedingen einen hohen Zeitaufwand beim Eintrag der Hydrokolloide, insbesondere Celluloseether, in wäßrige Systeme, was z.B. bei der Zubereitung von Bauwerkstoffen und Bohrspülungen oder auch bei der Herstellung schnellöslicher Klebstoffe bzw. Kleister zu anwendungstechnischen Problemen führt.

Hydrokolloidmischungen mit verbesserter Dispergierbarkeit in Wasser aus einem unvernetzten und einem vernetzten Hydrokolloid werden dadurch hergestellt, daß wenigstens eines der Hydrokolloide vor der Dispergierung in einer Mischvorrichtung mit wenigstens einem Quell- oder Lösungsmittel für das Hydrokolloid beaufschlagt und intensiv vermischt wird (vgl. z.B. EP-A 0 407 838).

Es ist seit langem bekannt, Hydrokolloide, insbesondere Celluloseether, wie z.B. Carboxymethylcellulose- und Methylhydroxyalkylcelluloseether, mit Hiife von mono-, bi- und polyfunktionellen Verbindungen zu hydrophobieren und reversibel zu vernetzen. Durch Bildung von Ester- oder Acetalstrukturen ist es möglich, Hydrokolloide temporär zu hydrophobieren, um somit ein schnelles und problemloses, d.h. klumpenfreies Dispergieren in wäßrigen Systemen zu ermöglichen. Bewährte Vernetzungsmittel sind z.B. Säuren und Anhydride (siehe z.B. US 3 272 64, aber auch US 4 521 594), Formaldehyd oder Dialdehyde, wie z.B. Glyoxal (siehe z.B. US 1 142 281, US 2 329 741, US 2 879 268, US 3 072 635, US 3 903 076, DE-A 24 15 556, US 4 373 959, BE 535 665). Auch eine Verkapselungstechnik wurde bereits vorgeschlagen (vgl. z.B. US 4 402 856).

Während die Verseifung der durch Säuren oder Ammoniak hydrophobierten Hydrokolloide den Zusatz von Alkali notwendig macht, ist bei der Vernetzung mit Aldehyden ein Alkalizusatz nicht unbedingt erforderlich.

Eine derart, vorzugsweise mit Aldehyden erfolgte reversible Hydrophobierung, ist zum einen steuerbar durch den Grad der Vernetzung, also die Menge an zugesetztem Vernetzungsreagenz, zum anderen läßt sich die Hydrophobierung durch schrittweise Erhöhung des pH-Wertes gezielt aufheben. Aus ökonomischen und gesundheitlichen Gründen ist jedoch die Menge an einzusetzendem Vernetzungsreagenz möglichst gering zu halten. Die Beschleunigung der Auflösung durch nachträglichen Alkalizusatz ist aus praktischen und wirtschaftlichen Erwägungen als nachteilig anzusehen.
Gegenstand der Erfindung sind mit Aldehyden reversibel vernetzte Hydrokolloidzusammensetzungen mit verbesserter Dispergierbarkeit, dadurch gekennzeichnet, daß die Hydrokolloidzusammensetzung aus wenigstens einem unvernetzten Hydrokolloid, also einem chemisch veränderten Biopolymer, aus der Gruppe der Polysaccharidether und wenigstens einem Polysaccharid, aus der Gruppe der Cellulosechemiezellstoffe, Linters-, Nadelholz-Sulfit-, Nadelholz-Sulfat- und/oder Laubholzzellstoffe besteht, wobei der Anteil des Polysaccharids, bezogen auf die gesamte Hydrokolloidzusammensetzung, 5 - 95 Gew.-% beträgt.
Gegenstand der vorliegenden Erfindung ist ferner ein vor allem ökologisches und einfaches Verfahren zur Herstellung einer in Wasser klumpenfrei dispergierbaren, pumpbaren Hydrokolloid-Zusammensetzung, dadurch gekennzeichnet, daß die Zusammensetzung aus wenigstens einem unvernetzten Hydrokolloid, insbesondere einem Celluloseether und mindestens einem Polysaccharid in einer Mischvorrichtung mit einem Quellmittel beaufschlagt und einem Netzmittel hydrophobiert wird.

Die erfindungsgemäßen Mischungen sind pumpbar und lassen sich klumpenfrei in wäßrigen Systemen dispergieren. Als Vernetzungsreagentien werden mono-, bi- und/oder polyfunktionelle Verbindungen, insbesondere Aldehyde, speziell Glyoxal eingesetzt. Die Zugabe des Quellmittels, vorzugsweise Wasser, kann sowohl zu einer zuvor hergestellten Mischung von Hydrokolloid also chemisch veränderten, veredelten Biopolymer und Polysaccharid, d.h. chemisch unveränderten, nativen Biopolymer, als auch zu nur einer der beiden Komponenten erfolgen, wobei nach einer Einwirkungszeit die zweite Komponente als vorzugsweise trockene Substanz zugegeben wird. Das Vernetzungsreagenz kann allein oder mit einem Teil oder der Gesamtmenge an zuzusetzendem Wasser zu der Mischung aus Hydrokolloid und Zellstoff zugegeben werden.

Unter Hydrokolloiden werden im Rahmen der vorliegenden Erfindung chemisch veränderte, veredelte Biopolymere verstanden, die wasserlöslich sind bzw. nach Aufhebung der Vernetzung wasserlöslich werden. Hydrokolloide sind Polysaccharidether, wie z.B. Celluloseether, Carboxyalkylcellulosen (z.B. Carboxymethylcellulose), Hydroxyalkylcellulosen (z.B. Hydroxyethyl-, Hydroxypropylcellulosen), Carboxyalkylhydroxyalkylcellulosen (wie z.B. Carboxymethylhydroxyethyl-, Carboxymethylhydroxypropylcellulose), Sulfoalkylcellulosederivate (z.B. Sulfoethylcellulose, Methylsulfoethylcellulose, Carboxymethylsulfoethylcellulose, Hydroxyethyl/Hydroxypropylsulfoethylcellulose), Alkylcellulosen (z.B. Methylcellulose, Ethylcellulose), Alkylhydroxyalkylcellulose (z.B. Methylhydroxyethylcellulose, Ethylhydroxyethylcellulose, Methylhydroxypropylcellulose, Ethylhydroxypropylcellulose), Alkylencellulosen (wie z.B. Allylcellulose), Alkylenalkylcellulosen (z.B. Allylmethylcellulose, Allylethylcellulose), Dialkylaminoalkylcellulose (z.B. Diethylaminoethylcellulose), Dialkylaminoalkylhydroxyalkylcellulosen (wie z.B. Diethylaminoethylhydroxyethylcellulosen).

Als unvernetztes Hydrokolloid werden bevorzugt die wasserlöslichen Celluloseether Methylhydroxyethylcellulose, Methylhydroxypropylcellulose und Carboxymethylcellulose eingesetzt.

Als Polysaccharide werden unveredelte, also chemisch unveränderte, native Biopolymere, aus der Gruppe der Cellulose-chemiezellstoffe, Linters-, Nadelholz-Sulfit-, Nadelholz-Sulfat- und/oder Laubholzzellstoffe verwendet.

Der Anteil des Polysaccharids, bezogen auf die Summe der Hydrokolloidzusammensetzung beträgt 5 bis 95 Gew.-%, insbesondere 15 bis 80 Gew.-%.

Die Vernetzung von Hydrokolloid und Zellstoff erfolgt nach den bekannten Methoden mit Dialdehyden, vorzugsweise Glyoxal.

Unter Quellmittel werden derartige Verbindungen verstanden, die zu einer Quellung des Hydrokolloids, insbesondere Celluloseethers führen. Als Quellmittel werden wäßrige Systeme, vorzugsweise Wasser oder wäßrig-alkoholische Lösungen verwendet. Das Quellmittel wird bevorzugt in einer Menge von 10 bis 80 Gew.-%, besonders bevorzugt in einer Menge von 15 bis 60 Gew.-% eingesetzt, bezogen auf die gesamte Menge von in der Mischung vorliegendem Hydrokolloid, Polysaccharid, Verzögerungsgemisch und Quellmittel.

Für eine homogene und intensive Vermischung von Hydrokolloid, Polysaccharid, Quellmittel und Vernetzungsreagenz muß für eine gute Durchmischung gesorgt werden. Geeignete Apparaturen hierzu sind z.B. Kneter, Feuchtgutmischer, Granuliertrommeln, Pelletierteller oder -trommeln.

Die Verweilzeit in dem Mischungsaggregat ist u.a. abhängig von den Knetkräften die in der verwendeten Rezeptur herrschen. Bevorzugt ist eine Zeit von 15 bis 120 min, insbesondere 30 bis 80 min.

Nachdem die Produkte innig miteinander vermischt worden sind, wird das Produktgemisch einer Trocknung unterzogen. Die Wahl der Trocknungsmethode richtet sich dabei nach den Eigenschaften, dem Zustand und der Menge des zu trocknenden Gutes, der zulässigen Restfeuchte, der mechanischen und thermischen Belastbarkeit sowie der chemischen Beständigkeit des Gutes. Die Art der Trocknung ist für die Erfindung unerheblich. Geeignete Trocknungsaggregate sind z.B. Horden-, Wirbelschicht- oder Trommeltrockner.

Die Produkte werden anschließend gemahlen, wobei das Zerkleinerungsverfahren als Trocken- oder auch als Naßvermahlung durchgeführt werden kann. Geeignete Apparaturen hierfür sind z.B. Schwing-, Walzen- und Kugelmühlen sowie Strahl-, Schlag- und Schleudermühlen. Nach der Mahlung besitzen die Produkte eine Partikelgröße von 100 % <2 mm, insbesondere <1 mm, speziell <0,8 mm.

Mit Hilfe des beschriebenen Verfahrens lassen sich Hydrokolloid-Mischungen mit vorzugsweise bis zu 60 %, insbesondere mit bis zu 50 %, an Polysaccharid herstellen. Das erfindungsgemäße Verfahren ist einfach umsetzbar, kommt mit geringen Mengen an Vernetzungsmittel aus und verwendet mit Wasser ein toxikologisch unbedenkliches Quellmittel. Durch die Verwendung von Aldehyden ist die Aufhebung der Vernetzung auch ohne Zugabe von basischen Substanzen möglich. Die nach dem erfindungsgemäßen Verfahren hergestellten Hydrokolloid-Zusammensetzungen können zusätzlich übliche Hilfsstoffe, insbesondere Puffer, Füllstoffe, Kunststoffdispersionspulver, Konservierungsmittel, Säuren (z.B. Phosphorsäure), Salze (z.B. Natriumphosphat), Entschäumer und Luftporenbildner und Stabilisatoren o.a. enthalten. Derartige Hilfsstoffe werden vorzugsweise in Mengen von maximal 50 %, insbesondere bis 10 % eingesetzt. Die erfindungsgemäßen Hydrokolloid-Zusammensetzungen finden z.B. Verwendung in Bauwerkstoffen, als Kleisterzubereitungen, in Dispersionsfarben, bei der Papierbeschichtung und in der keramischen Industrie. Sie sind ferner als Verdicker oder Prozeßhilfsmittel in der chemischen, pharmazeutischen, kosmetischen und der Bohrindustrie einsetzbar.

Die in den nachfolgend aufgeführten Beispielen erwähnten Carboxymethylcellulosen (CMC) sind wie folgt charakterisiert:

### Typ A) Handelsübliche Carboxymethylcellulose mit folgenden Kenndaten:

- Substitutionsgrad:: DS = 0,65 bis 0,95
- Viskosität:: 9.000 bis 12.000 mPa.s (2 gew.-%ige Lösung, Schergefälle D = 2,5 s⁻¹, T = 20°C [Rotationsviskosimeter der Firma Haake]).

### Typ B) Handelsübliche Carboxymethylcellulose mit folgenden Kenndaten:

- Substitutionsgrad:: DS = 0,65 bis 0,95
- Viskosität:: 800 bis 1.200 mPa.s (gemessen an einer 2 gew.-%igen wäßrigen Lösung, Schergefälle D = 2,5 s⁻¹, T = 20°C [Rotationsviskosimeter der Firma Haake]).

Als Verzögerungsgemisch wird eine 50 %ige wäßrige Lösung von Glyoxal mit Mononatriumphosphat eingesetzt (Einsatzmenge: 1 kg Mononatriumphosphat auf 6 1 50 %ige Lösung von Glyoxal).

Zur Überprüfung der Verzögerungswirkung wird das zu prüfende Produkt, unter definierten Bedingungen, in einem definierten Ansatzverhältnis in das Lösewasser eingerührt. Sofort nach dieser Prozedur wird die relative Viskosität der entstandenen Suspension kontinuierlich mit einem Visko-Tester bis zu einem Anzeigewert von 5 Skalenteilen gemessen. Der Zeitraum vom Zeitpunkt des Einrührens des Produktes in das Lösewasser bis zum Erreichen des Anzeigewertes von 5 Skalenteilen wird mit einer Stoppuhr gemessen und als Anfangsviskosität in Sekunden ausgewiesen.

Im einzelnen wird hierbei wie folgt vorgegangen:

Zu 735 g eines auf einen pH-Wert von 7,0 eingestellten Lösewassers werden 15 g des zu prüfenden Produktes innerhalb von 5 sec. verlustfrei unter kontinuierlichem Rühren quantitativ eingegeben. Anschließend wird 5 sec. weiter gerührt. Nach Ablauf der angegebenen Probenvorbereitungszeit wird sofort kontinuierlich die relative Viskosität mit einem Visko-Tester (Visko-Tester VT 181, Meßsystem RS [Firma Haake]) bei der Umdrehungszahl der Stufe 1 gemessen. Bei Erreichen eines Skalenwertes von 5 Skalenteilen wird die Zeit gestoppt.

### Beispiel 1

Zu 800 g eines handelsüblichen CMC-Granulates (Typ A) werden 200 g eines fein gemahlenen Holzzellstoffes hinzugegeben und das Gemisch 30 min in einem Feuchtgutmischer intensiv miteinander vermischt. 500 g der so hergestellten Mischung werden in einen Kneter eingegeben. Bei laufendem Knetwerk werden 250 g Wasser und 7 g eines Verzögerungsgemisches o.g. Zusammensetzung auf das Gemisch von CMC-Granulat und Holzzellstoff aufgedüst. Das Gemenge wird über einen Zeitraum von 45 min intensiv verknetet und anschließend bei 50°C getrocknet. Die Restfeuchte des Produktgemisches liegt bei 6 bis 8 %. Das gemahlene Produktgemisch besitzt eine Sieblinie von 100 % <1000 µm und 70 % <600 µm und läßt sich klumpenfrei in Wasser dispergieren.

Die nach dem o.g. Verfahren ermittelte Anfangsviskosität wird nach 240 sec. erreicht. Nach 8 min werden 30 % der Endviskosität erhalten. Die Endviskosität von 6.300 mPa.s erhält man nach 25 min, der pH-Wert der Lösung liegt bei 6,8. Wird die Menge an Verzögerungsgemisch von 7 g auf 21 g erhöht, wird die Anfangsviskosität nach 25 min erreicht.

### Beispiel 2

Je 200 kg eines handelsüblichen CMC-Granulats (Typ A und B) werden mit 122,5 kg eines fein gemahlenen Holzzellstoffes 30 min in einem Feuchtgutmischer intensiv vermischt. Das Produkt wird in einen Kneter eingegeben und mit 300 kg Wasser und 7 kg des o.g. Verzögerungsgemisches bei laufendem Knetwerk bedüst und bei einer Laufzeit von einer Stunde intensiv verknetet. Das Produktgemisch wird bei 105⁰C auf eine Restfeuchte von 10 % getrocknet und anschließend gemahlen. Die Sieblinie des Produktes liegt bei 100 % <800 µm und 90 % <400 µm. Die nach dem o.g. Verfahren ermittelte Anfangsviskosität wird nach 240 sec erreicht. Nach 25 min hat sich die Endviskosität von 6.500 mPa.s eingestellt. Der pH-Wert der Lösung liegt bei 6,9.

### Beispiel 3 (Vergleich)

Dieselbe Celluloseethermischung wie in Beispiel 1 wird in einem Kneter mit 250 g Wasser, aber diesmal ohne das Verzögerungsgemisch, bei laufendem Knetwerk bedüst und nachfolgend 45 min verknetet. Eine in Wasser gegebene Probe des getrockneten und gemahlenen Produktes führt zur Verklumpung (pH-Wert der Lösung: 7,4). Die Viskosität der Lösung konnte daher nicht ermittelt werden.

### Beispiel 4 (Vergleich)

400 g des in Beispiel 1 bezeichneten CMC-Granulates werden ohne Zusatz des Holzzellstoffes in einen Kneter eingegeben. Bei laufendem Knetwerk wird die CMC mit 250 g Wasser und 7 g Verzögerungsgemisch bedüst. Das Produkt wird 45 min lang verknetet und durch anschließende Trocknung auf eine Restfeuchte von 6 bis 8,0 % gebracht. Nach Mahlung hat die CMC eine Sieblinie von 100 % <1000 µm und 70 % <600 µm. Das Produkt läßt sich klumpenfrei in Wasser dispergieren (pH-Wert: 7,2). Die nach dem o.g. Verfahren ermittelte Anfangsviskosität wird nach 110 sec erreicht. Nach 25 min hat sich die Endviskosität von 10.200 mPa.s eingestellt.

Wird die Menge an Verzögerungsgemisch von 7 g auf 21 g erhöht, wird die Anfangsviskosität nach 8 min erreicht. Um Verzögerungen einzustellen, die den in Beispiel 1 aufgeführten Angaben entsprechen, ist mindestens die doppelte Menge an Verzögerungsgemisch erforderlich.

Die genannten Beispiele zeigen, daß sich lediglich durch Abmischen von Hydrokolloiden, also chemisch veränderten Biopolymeren (z.B. CMC) mit Polysacchariden, d.h. nativen, chemisch unveränderten Biopolymeren (z.B. Holzzellstoffen), bei gleicher Menge an Quell- bzw. Netzmittel, längere Verzögerungen (dargestellt als Anfangsviskosität) einstellen lassen, ohne daß dabei die Menge an Netzmittel erhöht werden muß. Das Einstellen der Endviskosität wird hiervon nicht berührt. Neben ökologischen Produktvorteilen führt der Einsatz der erfindungsgemäß vernetzten Hydrokolloidmischungen darüber hinaus zu wirtschaftlichen Vorteilen, da durch den Einsatz der erfindungsgemäß beanspruchten Hydrokolloidmischungen die Menge an veredeltem Biopolymer in der Mischung reduziert werden kann, ohne daß damit eine Verschlechterung der Produktqualität einhergeht.

## Patentansprüche

1. Mit Aldehyden reversibel vernetzte Hydrokolloidzusammensetzung mit verbesserter Dispergierbarkeit, dadurch gekennzeichnet, daß die Hydrokolloidzusammensetzung aus wenigstens einem nicht vernetzten Hydrokolloid (A), also einem chemisch veränderten Biopolymer, aus der Gruppe der Polysaccharidether und wenigstens einem chemisch unveränderten, nativen Polysaccharid (B), aus der Gruppe der Cellulosechemiezellstoffe, Linters-, Nadelholz-Sulfit-, Nadelholz-Sulfat- und/oder Laubholzzellstoffe besteht, wobei der Anteil des Polysaccharids (B), bezogen auf die gesamte Hydrokolloidzusammensetzung, 5 - 95 Gew.-% beträgt.

2. Verfahren zur Herstellung einer in Wasser klumpenfrei dispergierbaren, pumpbaren Hydrokolloidzusammensetzung gemäß Anspruch 1, dadurch gekennzeichnet, daß die Zusammensetzung, bestehend aus wenigstens einem unvernetzten Hydrokolloid aus der Gruppe der Polysaccharidether, insbesondere einem Celluloseether und mindestens einem chemisch unveränderten, nativen Polysaccharid aus der Gruppe der Cellulosechemiezellstoffe, Linters-, Nadelholz-Sulfit, Nadelholz-Sulfat- und/oder Laubholzzellstoffe in einer Mischvorrichtung mit einem Quellmittel beaufschlagt und einem Netzmittel hydrophobiert wird.

3. Verfahren gemäß Anspruch 2, dadurch gekennzeichnet, daß beide Komponenten miteinander vermischt werden, mit einem Quellmittel beaufschlagt, intensivst miteinander vermischt und mit einem Netzmittel reversibel hydrophobiert werden, wobei anschließend das Quellmittel wieder abgezogen wird.

4. Verfahren gemäß Anspruch 2 oder 3, dadurch gekennzeichnet, daß als Polysaccharidether Celluloseether, verwendet werden.

5. Verfahren nach einem der Ansprüche 2 bis 4, dadurch gekennzeichnet, daß als Quellmittel Wasser oder organische Lösungsmittel, insbesondere wäßrig-organische, speziell wäßrig-alkoholische Lösungen eingesetzt werden.

6. Verfahren nach einem der Ansprüche 2 bis 5, dadurch gekennzeichnet, daß als nicht vernetztes Hydrokolloid Methylhydroxyethylcellulose, Methylhydroxypropylcellulose, Carboxymethylethylcellulose bzw. das Alkali- oder Ammoniumsalz der Carboxymethylcellulose verwendet wird.

7. Verfahren nach einem der Ansprüche 2 bis 6, dadurch gekennzeichnet, daß die Hydrokolloidzusammensetzung mit Aldehyden, insbesondere Glyoxal, vernetzt wird.

8. Verfahren nach einem der Ansprüche 2 bis 7, dadurch gekennzeichnet, daß die Hydrokolloidzusammensetzung auf eine geeignete, auf die Lösezeit abgestimmte Sieblinie gebracht wird.

9. Verwendung einer Hydrokolloidzusammensetzung nach Anspruch 1, dadurch gekennzeichnet, daß die Produkte in Bauwerkstoffen, Bohrspülungen und Klebstoffen Verwendung finden.

## Claims

1. Hydrocolloid composition reversibly crosslinked with aldehydes and having improved dispersibility, characterised in that the hydrocolloid composition comprises at least one uncrosslinked hydrocolloid (A), *i.e.* a chemically modified biopolymer, from the group of polysaccharide ethers, and at least one chemically unmodified, native polysaccharide (B), from the group of chemical cellulose pulps, linters pulps, softwood sulfite pulps, softwood sulfate pulps and/or hardwood pulps, wherein the proportion of the polysaccharide (B) is 5-95 wt.%, relative to the entire hydrocolloid composition.

2. Process for the production of a pumpable hydrocolloid composition according to claim 1, which is dispersible in water without forming lumps, characterised in that the composition, consisting of at least one uncrosslinked hydrocolloid from the group of polysaccharide ethers, in particular a cellulose ether, and at least one chemically unmodified, native polysaccharide from the group of chemical cellulose pulps, linters pulps, softwood sulfite pulps, softwood sulfate pulps and/or hardwood pulps, is treated in a mixing apparatus with a swelling agent and hydrophobised with a wetting agent.

3. Process according to claim 2, characterised in that the two components are mixed together, treated with a swelling agent, ultra-intensively mixed together and reversibly hydrophobised with a wetting agent, wherein the swelling agent is subsequently removed.

4. Process according to claim 2 or 3, characterised in that the polysaccharide ethers used are cellulose ethers.

5. Process according to one of claims 2 to 4, characterised in that the swelling agent used comprises water or organic solvents, in particular aqueous-organic, especially aqueous-alcoholic solutions.

6. Process according to one of claims 2 to 5, characterised in that the uncrosslinked hydrocolloid used comprises methylhydroxyethylcellulose, methylhydroxypropylcellulose, carboxymethylethylcellulose or the alkali metal or ammonium salt of carboxymethylcellulose.

7. Process according to one of claims 2 to 6, characterised in that the hydrocolloid composition is crosslinked with aldehydes, in particular glyoxal.

8. Process according to one of claims 2 to 7, characterised in that the hydrocolloid composition is adjusted to a grading curve tailored to dissolution time.

9. Use of a hydrocolloid composition according to claim 1, characterised in that the products are used in building materials, drilling fluids and adhesives.

## Revendications

1. Composition d'hydrocolloïde réticulée de manière réversible avec des aldéhydes, possédant une dispersibilité améliorée, caractérisée en ce que la composition d'hydrocolloïde est constituée par au moins un hydrocolloïde (A) non réticulé, c'est-à-dire un biopolymère modifié par voie chimique, choisi parmi le groupe des éthers de polysaccharides, et par au moins un polysaccharide (B) naturel non modifié par voie chimique choisi parmi le groupe comprenant des pâtes chimiques de cellulose, des pâtes de linters, des pâtes de sulfite de résineux, des pâtes de sulfate de résineux et/ou des pâtes de bois d'arbres à feuilles caduques, la fraction du polysaccharide (B), rapportée à la composition totale de l'hydrocolloïde, s'élevant de 5 à 95% en poids.

2. Procédé pour la préparation d'une composition d'hydrocolloïde apte à être pompée et apte à être dispersée dans l'eau sans former des grumeaux, selon la revendication 1, caractérisé en ce qu'on charge la composition constituée par au moins un hydrocolloïde non réticulé choisi parmi le groupe des éthers de polysaccharides, en particulier par un éther cellulosique, et par au moins un polysaccharide naturel non modifié par voie chimique choisi parmi le groupe comprenant des pâtes chimiques de cellulose, des pâtes de linters, des pâtes de sulfite de résineux, des pâtes de sulfate de résineux et/ou des pâtes de bois d'arbres à feuilles caduques, dans un dispositif de mélange avec un agent gonflant et on la rend hydrophobe avec un agent de réticulation.

3. Procédé selon la revendication 2, caractérisé en ce qu'on mélange les deux composants l'un avec l'autre, on charge le mélange avec un agent gonflant, on les mélange les uns avec les autres de manière très intense et on les rend hydrophobes de manière réversible avec un agent de réticulation, dans lequel on extrait à nouveau l'agent gonflant par la suite.

4. Procédé selon la revendication 2 ou 3, caractérisé en ce qu'on utilise, à titre d'éther de polysaccharide, de l'éther cellulosique.

5. Procédé selon l'une quelconque des revendications 2 à 4, caractérisé en ce qu'on met en oeuvre, à titre d'agent gonflant, de l'eau ou des solvants organiques, en particulier des solutions aqueuses-organiques, spécifiquement des solutions aqueuses-alcooliques.

6. Procédé selon l'une quelconque des revendications 2 à 5, caractérisé en ce qu'on utilise, à titre d'hydrocolloïde non réticulé, de la méthylhydroxyéthylcellulose, de la méthylhydroxypropylcellulose, de la carboxyméthylcellulose, respectivement le sel alcalin ou d'ammonium de la carboxyméthylcellulose.

7. Procédé selon l'une quelconque des revendications 2 à 6, caractérisé en ce qu'on réticule la composition d'hydrocolloïde avec des aldéhydes, en particulier avec du glyoxal.

8. Procédé selon l'une quelconque des revendications 2 à 7, caractérisé en ce qu'on amène la composition d'hydrocolloïde à une courbe granulométrique appropriée modulée en fonction du temps de dissolution.

9. Utilisation d'une composition d'hydrocolloïde selon la revendication 1, caractérisée en ce que les produits trouvent une utilisation dans des matériaux de construction, dans des fluides de lavage et dans des adhésifs.
